# EUROPEAN PATENT SPECIFICATION

(11) **EP 2 631 365 B1**
(45) Date of publication and mention of the grant of the patent: **17.06.2020**
(21) Application number: 13154609.5
(22) Date of filing: 08.02.2013
(51) Int. Cl.: E02D 3/026, E02B 7/20

(54) **DEBRIS BARRIER WITH FUNCTION OF CONTROLLING STORAGE AMOUNT OF DREDGE SEDIMENT, MAINTENANCE MANAGEMENT SYSTEM AND METHOD USING THE SAME**
FREMDKÖRPERSPERRE MIT FUNKTION ZUR STEUERUNG DER ABLAGERUNGSMENGE ANFALLENDER SEDIMENTE, INSTANDHALTUNGSMANAGEMENTSYSTEM UND VERFAHREN DAMIT
BARRIÈRE À DÉBRIS AVEC FONCTION DE COMMANDE DE QUANTITÉ DE RÉSERVE DE SÉDIMENT DRAGUÉ, SYSTÈME DE GESTION DE MAINTENANCE ET PROCÉDÉ L'UTILISANT

(30) Priority: 15.02.2012 KR 20120015457
(43) Date of publication of application: 28.08.2013
(73) Proprietor: Korea Institute of Geoscience and Mineral Resources, Daejeon 305-350 (KR)
(72) Inventor: Song, Young-Suk, 305-358 Daejeon (KR); Jeong, Sueng Won, 616-734 BUSAN (KR); Lee, Choon Oh, 905-5 DAEJEON (KR)
(74) Representative: EP&C

(56) References cited:
- WO-A1-02/22505
- AT-B- 190 543
- AT-B- 357 194
- JP-A- 2001 123 433

## Description

### BACKGROUND OF THE INVENTION

### 1. Field of the Invention

The present invention relates generally to debris barriers with functions of controlling storage amount of dredge sediment, maintenance management systems using the debris barriers and maintenance management methods using the debris barriers and, more particularly, to a debris barrier which can control the angle of a screen relative to the ground and thus control the storage amount of dredge sediment, a maintenance management system which can measure in real time the amount of dredge sediment piled on the rear surface of the debris barrier using a piston type support unit, and a maintenance management method using the debris barrier.

### 2. Description of the Related Art

Recently, a variety of debris barriers are being developed. It is very important to clearly understand the functions of different kinds of debris barriers and select the most suitable one for a site. In other words, after investigating conditions of the site and estimating the amount of debris generated when a landslide occurs, the shape, size and installation location of the debris barrier must be determined.

The debris barrier functions to restrict and control avalanche of soil and rock, control the maximum amount of outer discharge of them, block drift wood, etc. In normal conditions, the debris barrier can allow water, soil and rock to flow without changing the stream of the water system. When flooding occurs, the debris barrier functions to block soil, rock and drift wood and control the maximum of outer discharge of them.

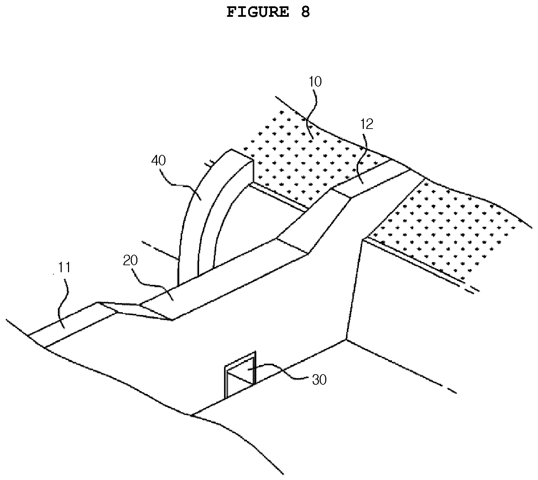

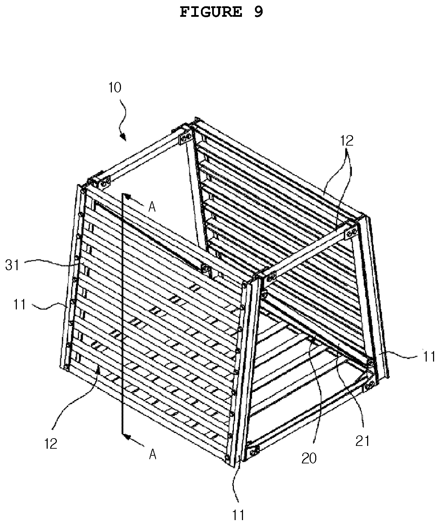

FIG. 8 is a perspective view of a debris barrier with an eco-corridor according to a conventional technique. FIG. 9 is a perspective view of a debris barrier using prefabricated steel frames according to a conventional technique.

As shown in FIG. 8, a debris barrier with an eco-corridor was proposed in Korean Patent Application No. 10-2011-0037246. This debris barrier includes a left dam shoulder 11, a right dam shoulder 12, a drainage canal 20, an opening 30 and an eco-corridor 40. The left and right dam shoulders 11 and 12 are symmetrically provided on left and right banks 10. The drainage canal 20 is integrally provided with the left and right dam shoulders 11 and 12 to control storage of water and debris, and is disposed between the surfaces of the left and right dam shoulders 11 and 12 that face each other. The opening 30 is formed below the drainage canal 20 and connects upstream water to downstream water. A first end of the eco-corridor 40 communicates with an upstream side surface of the opening, and a second end thereof is connected to either one of the left and right banks. The eco-corridor 40 is hollow in the longitudinal direction. The debris barrier having the above-mentioned construction functions to prevent outflow of debris and store water and debris. In a rainy season, the debris barrier provides a passage for fish to preserve the aquatic ecosystem. In a dry season, the debris barrier serves as a passage for wild animals to preserve the terrestrial ecosystem.

As shown in FIG. 9, a method of constructing a debris barrier for preventing flowing water from eroding a river or valley bed was proposed in Korean Application No. 10-2002-0052058. This method is divided into three phases. The first phase includes flattening a base surface on which to form a debris barrier. In the second phase, steel frame structures 10 are arranged in multiple rows to correspond to the width and length of the debris barrier to be formed on the base surface. Thereafter, the steel frame structures 10 are filled with fillers. Each steel frame structure 10 is formed in such a way that a hexahedral outer frame having a rectangular longitudinal cross-section and a trapezoidal lateral cross-section is formed by bolting sectional steel frames to each other, and then a screen, through which the filler charging the steel frame structure cannot pass, is provided on at least one of the six surface of the outer frame. In the third phase, steel frame structures are placed on upper ends of the steel frame structures in a number of rows that is one less than the number of rows of the steel frame structures of the lower layer. Thereafter, the steel frame structures are filled with fillers. The second and third phases are repeated so that the steel frame structures are stacked to a predetermined height of the debris barrier. The steel frame structures are filled with fillers.

However, in the case of the conventional debris barrier, it is impossible to reduce the angle of the screen of the debris barrier in the dry season and allow water and debris of the water system to flow more smoothly. It is also impossible to increase the angle of the screen of the debris barrier in the rainy season and block an avalanche of soil and rock or drift wood.

Therefore, development of a debris barrier which can control the amount of dredge sediment that can be stored by the rear surface of the debris barrier is required. The rear surface of the debris barrier refers to a part of the debris barrier on which debris that has flowed downward from the upper region of a valley are deposited to form dredge sediment.

Furthermore, to optimally maintain the function of the debris barrier, the amount of dredge sediment that is piled on the rear surface of the debris barrier must be checked, and based on this, the amount of dredge sediment must be managed or timing of dredging must be determined. In addition, such information should be directly measured in a site and transmitted to a manager in an office so that he/she can effectively cope with the situation.

AT-190.543-B discloses a barrier according to the preamble of claim 1. The snow avalanche barrier shown there includes a base, a screen formed of a plurality of horizontal members arranged on the base at positions spaced apart from each other in a vertical direction at regular intervals, a plurality of vertical members coupled perpendicular to the horizontal members to support the screen, and a plurality of support units supporting the screen to be inclined at a predetermined angle, in which the vertical members are coupled to the base by a first rotating unit, and in which each of the vertical members is coupled to its corresponding support unit by a second rotating unit.

This known snow avalanche barrier gets installed at a predetermined fixed inclination angle by means of having its support units fixated at predetermined lengths. A load of snow that gets piled on its screen does not get checked or managed.

### SUMMARY OF THE INVENTION

Accordingly, the present invention has been made keeping in mind the above problems occurring in the prior art, and an object of the present invention is to provide a debris barrier with a function of controlling a storage amount of dredge sediment, a maintenance management system for the debris barrier, and a maintenance management method for the debris barrier. The debris barrier with the function of controlling the storage amount of dredge sediment is installed, a strain gauge provided on a piston type support unit measures in the amount of the dredge sediment piled on a rear surface of the debris barrier real time, and the result of the measurement is analyzed and then notified to a manager so that the manager can rapidly determine timing of dredging.

In order to accomplish the above object, in an aspect, the present invention provides a debris barrier with a function of controlling a storage amount of dredge sediment, including: a base; a screen formed of a plurality of horizontal members arranged on the base at positions spaced apart from each other in a vertical direction at regular intervals; a plurality of vertical members coupled perpendicular to the horizontal members to support the screen; a plurality of support units supporting the screen to be inclined at a predetermined angle, each of the support units comprising a piston coupled to the corresponding vertical member, and a cylinder along which the piston moves; and a plurality of strain gauges provided on the each piston, the strain gauges measuring a load of the dredge sediment piled on the screen and generating a load data signal, wherein the vertical members are coupled to the base by a first rotating unit that rotates the vertical member depending on the load of the dredge sediment piled on the screen, and each of the vertical member is coupled to the corresponding piston by a second rotating unit that enables the piston to move along the corresponding cylinder depending on rotation of the vertical member, wherein, if the total load of dredge sediment piled on the screen is over a first limit, the screen rotates until an angle of the screen becomes a first angle, and wherein, if a variation in the total load of dredge sediment piled on the screen for a predetermined time is over a second limit, the screen rotates until the angle of the screen becomes a second angle.

In another aspect, the present invention provides a maintenance management system for a debris barrier with a function of controlling a storage amount of dredge sediment, the maintenance management system including: the debris barrier provided with a plurality of strain gauges measuring a load of dredge sediment piled on a screen and generating a load data signal; a dredge alarm generating unit receiving the load data signal and calculating a total load of the dredge sediment on an total area of the screen, wherein when the total load of the dredge sediment is over a preset first limit, or when variation in the total load of the dredge sediment as a function of time is over a preset second limit, the dredge alarm generating unit generates a dredge alarm signal; a wireless communication unit receiving the dredge alarm signal and remotely transmitting the dredge alarm signal using wireless communication method; and a dredge maintenance unit receiving the dredge alarm signal, analyzing an amount of dredge sediment corresponding to the total load of the dredge sediment, and determining timing of dredging.

In a further aspect, the present invention provides a maintenance management system for a debris barrier with a function of controlling a storage amount of dredge sediment, the maintenance management system including: the debris barrier provided with a plurality of strain gauges measuring a load of dredge sediment piled on a screen and generating a load data signal; a rainfall measurement unit installed on a ground at a location spaced apart from the debris barrier by a predetermined distance, the rainfall measurement unit measuring an amount of rainfall and generating a rainfall data signal; a dredge alarm generating unit receiving the rainfall data signal and the load data signal and calculating a total load of the dredge sediment on an entire area of the screen, wherein when the total load of the dredge sediment is over a preset first limit, or when variation in the total load of the dredge sediment as a function of time is over a preset second limit, the dredge alarm generating unit generates a dredge alarm signal; a wireless communication unit receiving the dredge alarm signal and remotely transmitting the dredge alarm signal using wireless communication method; and a dredge maintenance unit receiving the dredge alarm signal, analyzing an amount of dredge corresponding to both the amount of rainfall and the total load of the dredge sediment, and determining timing of dredging.

In a yet another aspect, the present invention provides a maintenance management method for a debris barrier with a function of controlling a storage amount of dredge sediment, the maintenance management method including: a debris barrier installation phase of installing the debris barrier provided with a plurality of strain gauges measuring a load of dredge sediment piled on a screen and generating a load data signal; a dredge alarm generating phase of receiving the load data signal, calculating a total load of the dredge sediment on an entire area of the screen, and generating a dredge alarm signal when the total load of the dredge sediment is over a preset first limit, or when variation in the total load of the dredge sediment as a function of time is over a preset second limit; a wireless communication phase of receiving the dredge alarm signal and remotely transmitting the dredge alarm signal using wireless communication method; and a dredge maintenance phase of receiving the dredge alarm signal, analyzing an amount of dredge sediment corresponding to the total load of the dredge sediment, and determining timing of dredging.

In a another aspect, the method further comprises a rainfall-measurement-unit installation phase of installing a rainfall measurement unit on a ground at a location spaced apart from the debris barrier by a predetermined distance, the rainfall measurement unit measuring an amount of rainfall and generating a rainfall data signal; a dredge alarm generating phase of receiving the rainfall data signal and the load data signal, calculating a total load of the dredge sediment on an entire area of the screen, and generating a dredge alarm signal when the total load of the dredge sediment is over a preset first limit, or when variation in the total load of the dredge sediment as a function of time is over a preset second limit; a wireless communication phase of receiving the dredge alarm signal and remotely transmitting the dredge alarm signal using wireless communication method; and a dredge maintenance phase of receiving the dredge alarm signal, analyzing an amount of dredge corresponding to both the amount of rainfall and the total load of the dredge sediment, and determining timing of dredging.

As described above, in a debris barrier with a function of controlling a storage amount of dredge sediment, a maintenance management system for the debris barrier, and a maintenance management method for the debris barrier according to the present invention, the debris barrier with the function of controlling the storage amount of dredge sediment is installed, and a strain gauge provided on a piston type support unit measures in the amount of the dredge sediment piled on a rear surface of the debris barrier real time. Furthermore, the result of the measurement is analyzed and then notified to a manager so that the manager can rapidly determine timing of dredging.

### BRIEF DESCRIPTION OF THE DRAWINGS

The above and other objects, features and advantages of the present invention will be more clearly understood from the following detailed description taken in conjunction with the accompanying drawings, in which:
FIG. 1A is a first perspective view illustrating a debris barrier with a function of controlling a storage amount of dredge sediment, according to the present invention;
FIG. 1B is a second perspective view illustrating the debris barrier according to the present invention;
FIG. 2 is a sectional view illustrating a support unit provided on the debris barrier according to the present invention;
FIG. 3 illustrates the operating principle of the debris barrier according to the present invention;
FIG. 4 is a view showing the construction of a first embodiment of a maintenance management system for a debris barrier with a function of controlling a storage amount of dredge sediment, according to the present invention;
FIG. 5 is a view showing the construction of a second embodiment of a maintenance management system for a debris barrier with a function of controlling a storage amount of dredge sediment, according to the present invention;
FIG. 6 is a block diagram showing a first embodiment of a maintenance management method for a debris barrier with a function of controlling a storage amount of dredge sediment, according to the present invention;
FIG. 7 is a block diagram showing a second embodiment of a maintenance management method for a debris barrier with a function of controlling a storage amount of dredge sediment, according to the present invention;
FIG. 8 is a perspective view of a debris barrier with an eco-corridor according to a conventional technique; and
FIG. 9 is a perspective view of a debris barrier using prefabricated steel frames according to a conventional technique.

### DESCRIPTION OF THE PREFERRED EMBODIMENTS

Hereinafter, preferred embodiments of the present invention will be described in detail with reference to the attached drawings. Reference should now be made to the drawings, in which the same reference numerals are used throughout the different drawings to designate the same or similar components. If, in the specification, detailed descriptions of well-known functions or configurations would unnecessarily obfuscate the illustration of the present invention, the detailed descriptions will be omitted.

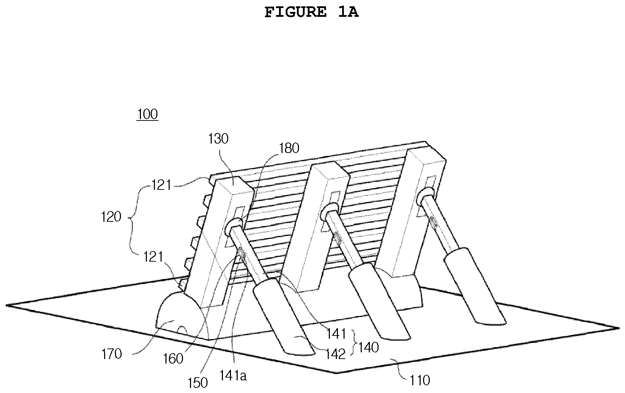

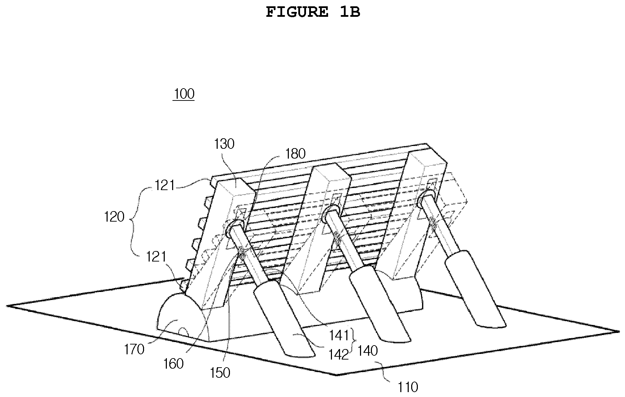

FIGS. 1A and 1B are perspective views illustrating a debris barrier with a function of controlling a storage amount of dredge sediment, according to the present invention.

As shown in FIGS. 1A and 1B, the debris barrier according to the present invention includes a base 110, a screen 120, a plurality of vertical members 130, a plurality of support units 130 and a plurality of strain gauges 150.

The screen 120 is a part on which dredge sediment stacks up and is formed of a plurality of horizontal members 121 which are arranged on the base 110 at positions spaced apart from each other in the vertical direction at regular intervals.

The vertical members 130 are coupled perpendicular to the horizontal members 121 to support the screen 120.

The support units 140 are coupled to the respective vertical members 130 so that the screen 120 is inclined at a predetermined angle and maintained in the inclined state.

In detail, each support unit 140 includes a piston 141 which is coupled to the corresponding vertical member 130, and a cylinder 142, one end of which is coupled to the base 110. The pistons 141 move along the corresponding cylinders 142, thus adjusting the angle at which the screen 120 is inclined with respect to the base 110.

The strain gauges 150 are provided on the respective pistons 141. The strain gauges 150 measure the load of the dredge sediment piled on the screen 120 and generate load data signals.

In detail, each strain gauge 150 is made of special material which does not rust. The strain gauge 150 measures the load of the dredge sediment and generates a load data signal which is a weight value of the dredge sediment. The load data signal is transmitted to the outside by a data line (not shown) which is provided in the strain gauge 150, thus helping a manager determine timing of dredging the dredge sediment.

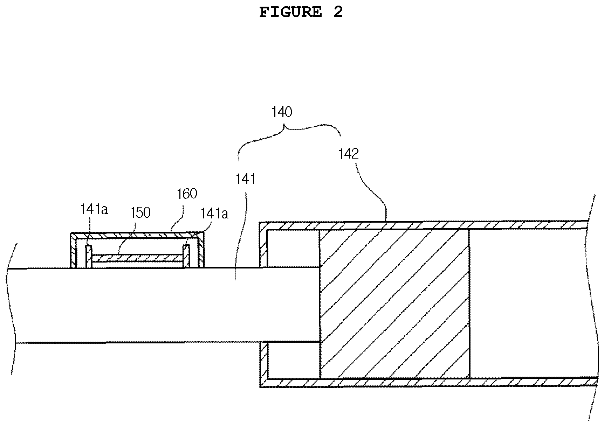

FIG. 2 is a sectional view illustrating the support unit provided on the debris barrier according to the present invention.

As shown in FIG. 2, the strain gauge 150 can be fastened to the piston 141 by a strain gauge support 141a which is installed on the piston 141.

In detail, the strain gauge 150 is provided on the piston 141 in such a way that opposite ends of the strain gauge 150 are fixed to the strain gauge support 141a installed on the piston 141, and the strain gauge 150 is covered with a protective cap 160.

The protective cap 160 covers both the strain gauge support 141a and the strain gauge 150 to prevent the strain gauge 150 from being contaminated by foreign substances. Because the protective cap 160 prevents foreign substances from coming near the strain gauge 150, the strain gauge 150 can precisely measure the load of the dredge sediment collected on the screen 120.

As shown in FIGS. 1A and 1B, the debris barrier according to the present invention further includes a first rotating unit 170 and a second rotating unit 180.

The first rotating unit 170 connects the vertical members 130 to the base 110 and rotates the vertical members 130 depending on the load of dredge sediment piled on the screen 120. Each second rotating unit 180 connects the corresponding vertical member 130 to the relative piston 141. As the vertical member 130 rotates, the second rotating unit 180 slides and rotates to enable the piston 141 to move along the cylinder 142.

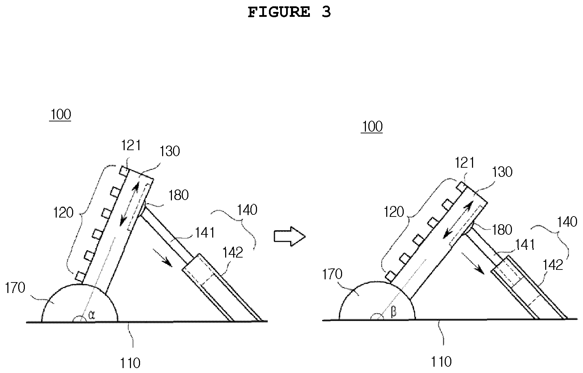

FIG. 3 illustrates the operating principle of the debris barrier according to the present invention.

In the debris barrier according to the present invention, if the total load of dredge sediment piled on the screen 120 is over a first limit that has been preset, as shown in FIG. 3, the screen 120 rotates until the angle of the screen 120 becomes β so that a predetermined amount of dredge sediment flows downstream in a valley. In this way, the amount of dredge sediment piled on the screen 120 can be adjusted.

Furthermore, in an emergency for example, if variation in the total load of dredge sediment piled on the screen 120 for a predetermined time is over a second limit that has been preset, in other words, if the total load of dredge sediment rapidly increases in a short time, or or, optionally, if variation in the amount of rainfall for a predetermined time is over a third limit that has been preset, that is, if the amount of rainfall suddenly increases in a short time, the screen 120 rotates until the angle of the screen 120 becomes α so that a predetermined amount of dredge sediment is deposited on the screen 120, thus preventing unexpected damage attributable to an excessive large amount of dredge sediment that suddenly flows downstream in the valley from occurring.

In other words, in the dry season, the screen 120 is rotated to an angle of β so that a predetermined amount of dredge sediment flows downstream in the valley. In the rainy season, the screen 120 is rotated to an angle α so that dredge sediment, the amount of which is rapidly increasing, can be blocked by the rear surface of the debris barrier. Here, adjusting the angle of the screen 120 includes moving the pistons 141 along the corresponding cylinders 142. Thereby, the amount of dredge sediment piled on the rear surface of the debris barrier can be adjusted.

Hereinafter, a first embodiment of a maintenance management system for a debris barrier with a function of controlling a storage amount of dredge sediment according to the present invention will be described in detail.

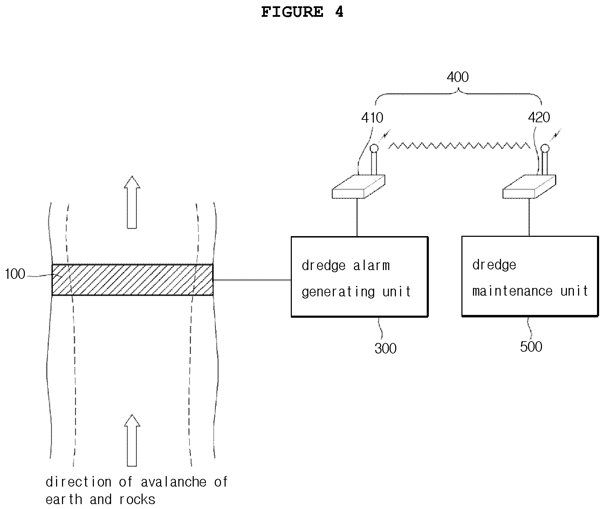

FIG. 4 is a view showing the construction of the first embodiment of the maintenance management system for the debris barrier according to the present invention.

As shown in FIG. 4, the first embodiment of the maintenance management system for the debris barrier according to the present invention includes a debris barrier 100, a dredge alarm generating unit 300, a wireless communication unit 400 and a dredge maintenance unit 500.

The debris barrier 100 provided in the first embodiment of the system of maintaining and managing the debris barrier according to the present invention is the debris barrier illustrated in FIGS. 1A and 1B. The strain gauges 150 provided in the debris barrier 100 measure the load of dredge sediment piled on the screen 120 and generate load data signals.

The dredge alarm generating unit 300 receives the load data signals and calculates the load of the dredge sediment on the entire area of the screen 120.

In detail, if the dredge alarm generating unit 300 receives load data signals created from the debris barrier 100, in detail, from the strain gauges 150 of the debris barrier 100 shown in FIGS. 1A and 1B, the dredge alarm generating unit 300 adds up the pieces of data and calculates the load of the dredge sediment on the entire area of the screen 120.

If the total load of the dredge sediment is over the first limit that has been preset, the dredge alarm generating unit 300 generates a dredge alarm signal. Further, if variation in the total load of the dredge sediment as a function of time is over the second limit that has been preset, the dredge alarm generating unit 300 also generates a dredge alarm signal.

In other words, when the total load of the dredge sediment is over the preset first limit regardless of time, the dredge alarm generating unit 300 generates a dredge alarm signal. When variation in the total load of the dredge sediment as a function of time is over the preset second limit, that is, when the total load of the dredge sediment rapidly increases in a short time, the dredge alarm generating unit 300 also generates a dredge alarm signal.

The wireless communication unit 400 receives the dredge alarm signal generated from the dredge alarm generating unit 300 and remotely transmits the dredge alarm signal using a wireless communication method.

In detail, the wireless communication unit 400 includes a first wireless communication unit 410 and a second wireless communication unit 420. The first wireless communication unit 410 receives the dredge alarm signal generated from the dredge alarm generating unit 300 and transmits it to the second wireless communication unit 420. The second wireless communication unit 420 receives the dredge alarm signal from the first wireless communication unit 410 and transmits it to the dredge maintenance unit 500. The first wireless communication unit 410 and the second wireless communication unit 420 can receive the dredge alarm signal and transmit it using a CDMA (code division multiple access) method.

The dredge maintenance unit 500 receives the dredge alarm signal, analyzes a dredging volume corresponding to the total load of the dredge sediment, and determines timing of dredging.

In detail, the dredge maintenance unit 500 analyzes the dredging volume from the total load of the dredge sediment that is received from the second wireless communication unit 420, and then determines an appropriate timing of dredging so that the manager can immediately cope with the situation.

Hereinafter, a second embodiment of a maintenance management system for a debris barrier with a function of controlling a storage amount of dredge sediment according to the present invention will be described in detail.

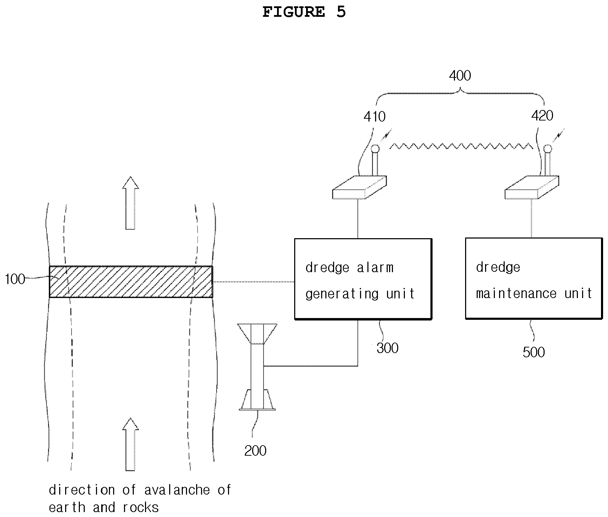

FIG. 5 is a view showing the construction of the second embodiment of the maintenance management system for the debris barrier according to the present invention.

As shown in FIG. 5, the second embodiment of the maintenance management system for the debris barrier according to the present invention includes a debris barrier 100, a rainfall measurement unit 200, a dredge alarm generating unit 300, a wireless communication unit 400 and a dredge maintenance unit 500.

The debris barrier 100 provided in the second embodiment of the system of maintaining and managing the debris barrier according to the present invention is the debris barrier illustrated in FIGS. 1A and 1B in the same manner as that of the first embodiment of the system of maintaining and managing the debris barrier. The strain gauges 150 provided in the debris barrier 100 measure the load of dredge sediment piled on the screen 120 and generate load data signals.

As shown in FIG. 5, the rainfall measurement unit 200 is installed on the ground at a position spaced apart from the debris barrier 100 by a predetermined distance. The rainfall measurement unit 200 measures the amount of rainfall and generates a rainfall data signal.

The dredge alarm generating unit 300 receives the rainfall data signal and the load data signal and calculates the load of the dredge sediment on the entire area of the screen 120

In detail, if the dredge alarm generating unit 300 receives load data signals created from the debris barrier 100, in detail, from the strain gauges 150 of the debris barrier 100 shown in FIGS. 1A and 1B, the dredge alarm generating unit 300 adds up the pieces of data and calculates the load of the dredge sediment on the entire area of the screen 120.

Here, if the total load of the dredge sediment is over a first limit that has been preset, the dredge alarm generating unit 300 generates a dredge alarm signal. Further, if variation in the total load of the dredge sediment as a function of time is over a second limit that has been preset, the dredge alarm generating unit 300 also generates a dredge alarm signal. In addition, if variation in the amount of rainfall as a function of time is over a third limit that has been preset, the dredge alarm generating unit 300 also generates a dredge alarm signal.

In other words, when the total load of the dredge sediment is over the preset first limit regardless of time, the dredge alarm generating unit 300 generates a dredge alarm signal. When variation in the total load of the dredge sediment as a function of time is over the preset second limit, that is, when the total load of the dredge sediment rapidly increases in a short time, the dredge alarm generating unit 300 also generates a dredge alarm signal. Moreover, when variation in the amount of rainfall as a function of time is over the preset third limit, that is, when the amount of rainfall sharply increases in a short time, the dredge alarm generating unit 300 also generates a dredge alarm signal.

The wireless communication unit 400 receives the dredge alarm signal generated from the dredge alarm generating unit 300 and remotely transmits the dredge alarm signal using a wireless communication method, in the same manner as the operation of the wireless communication unit 400 provided in the first embodiment of the system of maintaining and managing the debris barrier.

For this, the wireless communication unit 400 includes a first wireless communication unit 410 which receives the dredge alarm signal generated from the dredge alarm generating unit 300, and a second wireless communication unit 420 which receives the dredge alarm signal transmitted from the first wireless communication unit 410. The first wireless communication unit 410 and the second wireless communication unit 420 can receive the dredge alarm signal and transmit it using a CDMA (code division multiple access) method.

The dredge maintenance unit 500 receives a signal pertaining to the amount of rainfall and the dredge alarm signal, analyzes a dredging volume corresponding to the total load of the dredge sediment, and determines timing of dredging.

Given information about the amount of rainfall that is received from the second wireless communication unit 420, the dredge maintenance unit 500 calculates an estimated total load of the dredge sediment and analyzes the dredging volume, or analyzes the dredging volume from the measured total load of the dredge sediment. Thereafter, the dredge maintenance unit 500 determines appropriate timing of dredging so that the manager can immediately cope with the situation.

Hereinafter, a first embodiment of a maintenance management method for a debris barrier with a function of controlling a storage amount of dredge sediment according to the present invention will be described in detail.

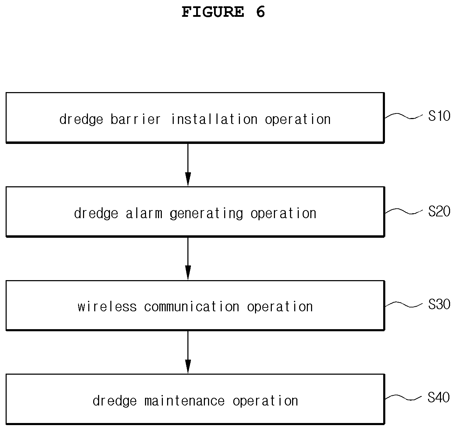

FIG. 6 is a block diagram showing the first embodiment of the maintenance management method for the debris barrier according to the present invention.

As shown in FIG. 6, the first embodiment of the maintenance management method for the debris barrier according to the present invention includes a dredge barrier installation phase S10, a dredge alarm generating phase S20, a wireless communication phase S30 and a dredge maintenance phase S40.

As shown in FIGS. 1A, 1B and 4, at the dredge barrier installation phase S10, the debris barrier 100 provided with the strain gauges 150 which measure the load of dredge sediment piled on the screen 120 and generate load data signals is installed in a valley.

At the dredge alarm generating phase S20, the dredge alarm generating unit 300 receives the load data signal and calculates the load of the dredge sediment on the entire area of the screen 120. If the total load of the dredge sediment is over the preset first limit, or if variation in the total load of the dredge sediment as a function of time is over the second limit, the dredge alarm generating unit 300 generates a dredge alarm signal.

At the wireless communication phase S30, the wireless communication unit 400 receives the dredge alarm signal and remotely transmits the dredge alarm signal using the wireless communication method.

At the dredge maintenance phase S40, the dredge maintenance unit 500 receives the dredge alarm signal, analyzes a dredging volume corresponding to the total load of the dredge sediment, and determines timing of dredging.

Hereinafter, a second embodiment of a maintenance management method for a debris barrier with a function of controlling a storage amount of dredge sediment according to the present invention will be described in detail.

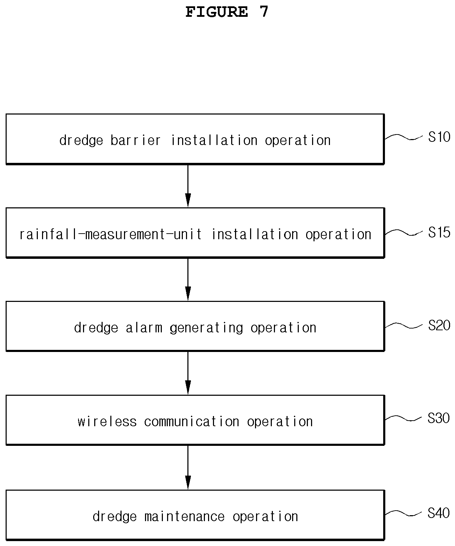

FIG. 7 is a block diagram showing the second embodiment of the maintenance management method for the debris barrier according to the present invention.

As shown in FIG. 7, the second embodiment of the maintenance management method for the debris barrier according to the present invention includes a dredge barrier installation phase S10, a rainfall-measurement-unit installation phase S15, a dredge alarm generating phase S20, a wireless communication phase S30 and a dredge maintenance phase S40.

As shown in FIGS. 1A, 1B and 5, at the dredge barrier installation phase S10 of the second embodiment, the debris barrier 100 provided with the strain gauges 150 which measure the load of dredge sediment piled on the screen 120 and generate load data signals is installed in a valley, in the same manner as that of the dredge barrier installation phase of the first embodiment of the maintenance management method for the debris barrier according to the present invention.

At the rainfall-measurement-unit installation phase S15, the rainfall measurement unit 200 which measures the amount of rainfall and generates a rainfall data signal is installed on the ground at a location spaced apart from the debris barrier 100 by a predetermined distance.

Although it is not illustrated in the drawings, the rainfall-measurement-unit installation phase S15 may be conducted before the dredge barrier installation phase S10. In other words, according to the present invention, the rainfall measurement unit 200 may be first installed on the ground at a predetermined location spaced apart from a location at which the debris barrier 100 is to be installed by a predetermined distance, before the debris barrier 100 is installed in a valley.

At the dredge alarm generating phase S20, the dredge alarm generating unit 300 receives the rainfall data signal and the load data signal and calculates the load of the dredge sediment on the entire area of the screen 120. If the total load of the dredge sediment is over the preset first limit, if variation in the total load of the dredge sediment as a function of time is over the preset second limit, or if variation in the amount of rainfall as a function of time is over the preset third limit, the dredge alarm generating unit 300 generates a dredge alarm signal.

At the wireless communication phase S30, the wireless communication unit 400 receives the dredge alarm signal and remotely transmits the dredge alarm signal using the wireless communication method.

At the dredge maintenance phase S40, the dredge maintenance unit 500 receives a signal pertaining to the amount of rainfall and the dredge alarm signal. Thereafter, the dredge maintenance unit 500 may calculate an estimated total load of the dredge sediment taking the amount of rainfall into account, analyze the dredging volume, and determine timing of dredging. Alternatively, the dredge maintenance unit 500 may analyze the dredging volume corresponding to only the total load of the dredge sediment and determine timing of dredging.

As described above, in a debris barrier with a function of controlling a storage amount of dredge sediment, a maintenance management system for the debris barrier, and a maintenance management method for the debris barrier according to the present invention, the debris barrier with the function of controlling the storage amount of dredge sediment is installed, and a strain gauge provided on a piston type support unit measures the amount of the dredge sediment piled on a rear surface of the debris barrier in real time. Furthermore, the result of the measurement is analyzed and then notified to a manager so that the manager can rapidly determine timing of dredging.

Although the preferred embodiments of a debris barrier with a function of controlling a storage amount of dredge sediment, a maintenance management system for the debris barrier, and a maintenance management method for the debris barrier according to the present invention have been disclosed for illustrative purposes, those skilled in the art will appreciate that various modifications, additions and substitutions are possible, without departing from the scope of the invention as disclosed in the accompanying claims.

## Claims

1. A debris barrier (100) with a function of controlling a storage amount of dredge sediment, comprising:
- a base (110);
- a screen (120) formed of a plurality of horizontal members (121) arranged on the base (110) at positions spaced apart from each other in a vertical direction at regular intervals;
- a plurality of vertical members (130) coupled perpendicular to the horizontal members (121) to support the screen (120);
- a plurality of support units (140) supporting the screen (120) to be inclined at a predetermined angle,
in which the vertical members (130) are coupled to the base (110) by a first rotating unit (170) that rotates the vertical member (130) depending on a load of the dredge sediment piled on the screen (120), and
in which each of the vertical member (130) is coupled to the corresponding support unit (140) by a second rotating unit (180),
**characterized in that,**
each of the support units (140) comprises a piston (141) coupled to the corresponding vertical member (130), and a cylinder (142) along which the piston (141) moves; and
a plurality of strain gauges (150) provided on the each piston (141), the strain gauges (150) measuring a load of the dredge sediment piled on the screen (120) and generating a load data signal,
wherein each of the vertical member (130) is coupled to the corresponding piston (141) by the second rotating unit (170) that enables the piston (141) to move along the corresponding cylinder (142) depending on rotation of the vertical member (130),
wherein, if the total load of dredge sediment piled on the screen (120) is over a first limit, the screen (120) rotates until an angle of the screen (120) becomes a first angle (β); and
wherein, if a variation in the total load of dredge sediment piled on the screen (120) for a predetermined time is over a second limit, the screen (120) rotates until the angle of the screen (120) becomes a second angle (α).

2. A maintenance management system for a debris barrier with a function of controlling a storage amount of dredge sediment, the maintenance management system comprising:
- the debris barrier (100) according to claim 1 provided with the plurality of strain gauges (150) measuring a load of dredge sediment piled on the screen (120) and generating a load data signal;
- a dredge alarm generating unit (300) receiving the load data signal and calculating a total load of the dredge sediment on an entire area of the screen (120), wherein when the total load of the dredge sediment is over a preset first limit, or when variation in the total load of the dredge sediment as a function of time is over a preset second limit, the dredge alarm generating unit (300) generates a dredge alarm signal;
- a wireless communication unit (400) receiving the dredge alarm signal and remotely transmitting the dredge alarm signal using wireless communication method; and
- a dredge maintenance unit (500) receiving the dredge alarm signal, analyzing an amount of dredge sediment corresponding to the total load of the dredge sediment, and determining timing of dredging.

3. A maintenance management system according to claim 2, further comprising:
- a rainfall measurement unit (200) installed on a ground at a location spaced apart from the debris barrier (100) by a predetermined distance, the rainfall measurement unit (200) measuring an amount of rainfall and generating a rainfall data signal;
the dredge alarm generating unit (300) receiving the rainfall data signal and the load data signal and calculating a total load of the dredge sediment on an entire area of the screen (120), when the total load of the dredge sediment is over a preset first limit, or when variation in the total load of the dredge sediment as a function of time is over a preset second limit, the dredge alarm generating unit generates a dredge alarm signal;
the wireless communication unit (400) receiving the dredge alarm signal and remotely transmitting the dredge alarm signal using wireless communication method; and
the dredge maintenance unit (500) receiving the dredge alarm signal, analyzing an amount of dredge corresponding to both the amount of rainfall and the total load of the dredge sediment, and determining timing of dredging.

4. A maintenance management method for a debris barrier (100) with a function of controlling a storage amount of dredge sediment, the maintenance managing method comprising:
a debris barrier installation phase (S10) of installing the debris barrier (100) according to claim 1 provided with the plurality of strain gauges (150) measuring a load of dredge sediment piled on the screen (120) and generating a load data signal;
a dredge alarm generating phase (S20) of receiving the load data signal, calculating a total load of the dredge sediment on an entire area of the screen (120), and generating a dredge alarm signal when the total load of the dredge sediment is over a preset first limit, or when variation in the total load of the dredge sediment as a function of time is over a preset second limit;
a wireless communication phase (S30) of receiving the dredge alarm signal and remotely transmitting the dredge alarm signal using wireless communication method; and
a dredge maintenance phase (S40) of receiving the dredge alarm signal, analyzing an amount of dredge sediment corresponding to the total load of the dredge sediment, and determining timing of dredging.

5. The maintenance management method according to claim 4 further comprising:
a rainfall-measurement-unit installation phase (S15) of installing a rainfall measurement unit (200) on a ground at a location spaced apart from the debris barrier (100) by a predetermined distance, the rainfall measurement unit (200) measuring an amount of rainfall and generating a rainfall data signal;
the dredge alarm generating phase (S20) receiving the rainfall data signal and the load data signal, calculating a total load of the dredge sediment on an entire area of the screen (120), and generating a dredge alarm signal when the total load of the dredge sediment is over a preset first limit, or when variation in the total load of the dredge sediment as a function of time is over a preset second limit;
the wireless communication phase (S30) receiving the dredge alarm signal and remotely transmitting the dredge alarm signal using wireless communication means; and
the dredge maintenance phase (S40) receiving the dredge alarm signal, analyzing an amount of dredge corresponding to both the amount of rainfall and the total load of the dredge sediment, and determining timing of dredging.

6. The maintenance management method as set forth in claim 5, wherein in the dredge alarm generating phase (S20), when variation in the amount of rainfall as a function of time is over a third limit so that the dredge alarm signal is generated,
the dredge maintenance phase (S40) comprises calculating an estimated total load of the dredge sediment taking the amount of rainfall into account, analyzing a dredging volume, and determining timing of dredging.

## Patentansprüche

1. Schuttbarriere (100) mit einer Funktion zum Steuern einer Ablagerungsmenge von Baggersediment, bestehend aus:
- einer Basis (110);
- einem Schirm (120), der aus einer Vielzahl von horizontalen Elementen (121) gebildet ist, die auf der Basis (110) an Positionen angeordnet sind, die in vertikaler Richtung in regelmäßigen Abständen voneinander beabstandet sind;
- eine Vielzahl von vertikalen Elementen (130), die senkrecht an die horizontalen Elementen (121) gekoppelt sind, um den Schirm (120) zu stützen;
- eine Vielzahl von Stützeinheiten (140), die den Schirm (120) derart stützen, dass er in einem vorbestimmten Winkel geneigt werden kann,
wobei die vertikalen Elemente (130) durch eine erste Rotationseinheit (170), die das vertikale Element (130) abhängig von einer Last des auf dem Schirm (120) aufgehäuften Baggersediments rotiert, an die Basis (110) gekoppelt sind, und
wobei jedes der vertikalen Elemente (130) durch eine zweite Rotationseinheit (180) mit der entsprechenden Stützeinheit (140) gekoppelt ist,
**dadurch gekennzeichnet, dass**
jede der Stützeinheiten (140) einen Kolben (141), der mit dem entsprechenden vertikalen Element (130) gekoppelt ist, und einen Zylinder (142), entlang dessen sich der Kolben (141) bewegt, umfasst; und
eine Vielzahl von Dehnungsmessvorrichtungen (150) an jedem Kolben (141) vorgesehen ist, wobei die Dehnungsmessvorrichtungen (150) eine Last des auf dem Schirm (120) aufgehäuften Baggersediments messen und ein Lastdatensignal erzeugen,
wobei jedes der vertikalen Elemente (130) durch die zweite Rotationseinheit (170), die es dem Kolben (141) ermöglicht, sich abhängig von der Rotation des vertikalen Elements (130) entlang des entsprechenden Zylinders (142) zu bewegen, an den entsprechenden Kolben (141) gekoppelt ist,
wobei, wenn die Gesamtlast des auf dem Schirm (120) aufgehäuften Baggersediments über einem ersten Grenzwert liegt, den Schirm (120) rotiert, bis ein Winkel des Schirms (120) zu einem ersten Winkel (β) wird; und
wobei, wenn eine Variation der Gesamtlast des auf dem Schirm (120) aufgehäuften Baggersediments während einer vorbestimmten Zeitdauer über einem zweiten Grenzwert liegt, der Schirm (120) rotiert, bis der Winkel des Schirms (120) zu einem zweiten Winkel (α) wird.

2. Instandhaltungsmanagementsystem für eine Schuttbarriere mit einer Funktion zum Steuern einer Ablagerungsmenge von Baggersediment, wobei das Instandhaltungsmanagementsystem umfasst:
- die Schuttbarriere (100) nach Anspruch 1, die mit einer Vielzahl von Dehnungsmessvorrichtungen (150) versehen ist, die eine Last des auf dem Schirm (120) aufgehäuften Baggersediments messen und ein Lastdatensignal erzeugen;
- eine Baggeralarmerzeugungseinheit (300), die das Lastdatensignal empfängt und eine Gesamtlast des Baggersediments auf einer gesamten Fläche des Schirms (120) berechnet, wobei die Baggeralarmerzeugungseinheit (300) ein Baggeralarmsignal erzeugt, wenn die Gesamtlast des Baggersediments über einem vorbestimmten ersten Grenzwert liegt, oder wenn die Veränderung der Gesamtlast des Baggersediments als Funktion der Zeit über einem vorbestimmten zweiten Grenzwert liegt;
- eine drahtlose Kommunikationseinheit (400), die das Baggeralarmsignal empfängt und das Baggeralarmsignal unter Verwendung eines drahtlosen Kommunikationsverfahrens aus der Ferne überträgt; und
- eine Baggerinstandhaltungseinheit (500), die das Baggeralarmsignal empfängt, eine der Gesamtlast des Baggersediments entsprechende Menge an Baggersediment analysiert und einen Zeitpunkt für das Baggern bestimmt.

3. Instandhaltungsmanagementsystem nach Anspruch 2, weiter umfassend:
- eine Niederschlagsmesseinheit (200), die auf einem Boden an einer Stelle installiert ist, die von der Schuttbarriere (100) um einen vorbestimmten Abstand entfernt ist, wobei die Niederschlagsmesseinheit (200) eine Niederschlagsmenge misst und ein Niederschlagsdatensignal erzeugt;
wobei die Baggeralarmerzeugungseinheit (300) das Niederschlagsdatensignal und das Lastdatensignal empfängt und eine Gesamtlast des Baggersediments auf einer gesamten Fläche des Schirms (120) berechnet, wenn die Gesamtlast des Baggersediments über einem vorbestimmten ersten Grenzwert liegt oder wenn die Veränderung der Gesamtlast des Baggersediments als Funktion der Zeit über einem vorbestimmten zweiten Grenzwert liegt, wobei die Baggeralarmerzeugungseinheit ein Baggeralarmsignal erzeugt;
wobei die drahtlose Kommunikationseinheit (400) das Baggeralarmsignal empfängt und das Baggeralarmsignal unter Verwenden eines drahtlosen Kommunikationsverfahrens in die Ferne überträgt; und
wobei die Baggerinstandhaltungseinheit (500) das Baggeralarmsignal empfängt, eine Baggermenge analysiert, die sowohl der Niederschlagsmenge als auch der Gesamtlast des Baggersediments entspricht, und einen Zeitpunkt für das Baggern bestimmt.

4. Instandhaltungsmanagementverfahren für eine Schuttbarriere (100) mit einer Funktion zum Steuern einer Ablagerungsmenge von Baggersediment, wobei das Instandhaltungsmanagementverfahren umfasst:
eine Schuttbarriereninstallationsphase (S10), in der die Schuttbarriere (100) nach Anspruch 1 installiert wird, die mit einer Vielzahl von Dehnungsmessvorrichtungen (150) versehen ist, die eine Last an Baggersediment, das auf dem Schirm (120) aufgehäuft ist, messen und ein Lastdatensignal erzeugen;
eine Baggeralarmerzeugungsphase (S20), in der das Lastdatensignal empfangen, eine Gesamtlast des Baggersediments auf einer gesamten Fläche des Schirms (120) berechnet, und ein Baggeralarmsignal erzeugt wird, wenn die Gesamtlast des Baggersediments über einem vorbestimmten ersten Grenzwert liegt oder wenn die Veränderung der Gesamtlast des Baggersediments als Funktion der Zeit über einem vorbestimmten zweiten Grenzwert liegt;
eine Phase der drahtlosen Kommunikation (S30), in der das Baggeralarmsignal empfangen und unter Verwenden eines drahtlosen Kommunikationsverfahrens in die Ferne übertragen wird; und
eine Baggerinstandhaltungsphase (S40), in der das Baggeralarmsignal empfangen, eine der Gesamtbelastung des Baggersediments entsprechende Menge an Baggersediment analysiert, und ein Zeitpunkt für das Baggern festgelegt wird.

5. Instandhaltungsmanagementverfahren nach Anspruch 4, weiter umfassend:
eine Installationsphase (S15) einer Niederschlagsmesseinheit, in der eine Niederschlagsmesseinheit (200) auf einem Boden an einer Stelle installiert wird, die von der Schuttbarriere (100) um einen vorbestimmten Abstand entfernt ist, wobei die Niederschlagsmesseinheit (200) eine Niederschlagsmenge misst und ein Niederschlagsdatensignal erzeugt;
die Baggeralarmerzeugungsphase (S20), in der das Niederschlagsdatensignal und das Belastungsdatensignal empfangen, eine Gesamtlast des Baggersediments auf einem gesamten Bereich des Schirms (120) berechnet und ein Baggeralarmsignal erzeugt wird, wenn die Gesamtlast des Baggersediments über einem vorbestimmten ersten Grenzwert liegt oder wenn die Veränderung der Gesamtlast des Baggersediments als Funktion der Zeit über einem vorbestimmten zweiten Grenzwert liegt;
eine Phase der drahtlosen Kommunikation (S30), in der das Baggeralarmsignal empfangen und das Baggeralarmsignal mit Hilfe von drahtlosen Kommunikationsmitteln in die Ferne übertragen wird; und
eine Baggerinstandhaltungsphase (S40), in der das Baggeralarmsignal empfangen, eine Baggermenge, die sowohl der Niederschlagsmenge als auch der Gesamtbelastung des Baggersediments entspricht, analysiert, und ein Zeitpunkt für das Baggern festgelegt wird.

6. Instandhaltungsmanagementverfahren nach Anspruch 5, wobei in der Baggeralarmerzeugungsphase (S20), wenn die Veränderung der Niederschlagsmenge als Funktion der Zeit über eine dritte Grenze hinausgeht, so dass das Baggeralarmsignal erzeugt wird, die Baggerinstandhaltungsphase (S40) ein Berechnen einer geschätzten Gesamtlast des Baggersediments unter Berücksichtigung der Niederschlagsmenge, ein Analysieren des Baggervolumens und ein Bestimmen eines Zeitpunkts für das Baggern umfasst.

## Revendications

1. Barrière à débris (100) ayant pour fonction de contrôler une quantité de stockage de sédiments de dragage, comprenant :
- une base (110) ;
- un écran (120) formé d'une pluralité d'éléments horizontaux (121) agencés sur la base (110) à des positions espacées les unes des autres dans une direction verticale à intervalles réguliers ;
une pluralité d'éléments verticaux (130) couplés perpendiculairement aux éléments horizontaux (121) en vue de prendre en charge l'écran (120) ;
une pluralité d'unités de support (140) prenant en charge l'écran (120) devant être incliné selon un angle prédéterminé ;
dans lequel les éléments verticaux (130) sont couplés à la base (110) par une première unité rotative (170) qui fait tourner l'élément vertical (130) en fonction d'une charge des sédiments de dragage empilés sur l'écran (120) ; et
dans lequel chaque élément vertical (130) est couplé à l'unité de support correspondante (140) par une seconde unité rotative (180) ;
**caractérisé en ce que :**
chacune des unités de support (140) comprend un piston (141) couplé à l'élément vertical correspondant (130), et un cylindre (142) le long duquel le piston (141) se déplace ; et
une pluralité de jauges de contrainte (150) fournie sur chaque dit piston (141), les jauges de contrainte (150) mesurant une charge des sédiments de dragage empilés sur l'écran (120) et générant un signal de données de charge ;
dans lequel chaque élément vertical (130) est couplé au piston correspondant (141) par la seconde unité rotative (170) qui permet au piston (141) de se déplacer le long du cylindre correspondant (142) en fonction de la rotation de l'élément vertical (130) ;
dans lequel, si la charge totale de sédiments de dragage empilés sur l'écran (120) est supérieure à une première limite, l'écran (120) tourne jusqu'à ce qu'un angle de l'écran (120) devienne un premier angle (β) ; et
dans lequel, si une variation de la charge totale de sédiments de dragage empilés sur l'écran (120) pendant un temps prédéterminé est supérieure à une deuxième limite, l'écran (120) tourne jusqu'à ce que l'angle de l'écran (120) devienne un second angle (α).

2. Système de gestion d'entretien pour une barrière à débris ayant pour fonction de contrôler une quantité de stockage de sédiments de dragage, le système de gestion d'entretien comprenant :
- la barrière à débris (100) selon la revendication 1, dotée de la pluralité de jauges de contrainte (150) mesurant une charge de sédiments de dragage empilés sur l'écran (120) et générant un signal de données de charge ;
- une unité de génération d'alarme de dragage (300) recevant le signal de données de charge et calculant une charge totale des sédiments de dragage sur une zone entière de l'écran (120), dans lequel, lorsque la charge totale des sédiments de dragage est supérieure à une première limite prédéfinie, ou lorsque la variation de la charge totale des sédiments de dragage en fonction du temps est supérieure à une deuxième limite prédéfinie, l'unité de génération d'alarme de dragage (300) génère un signal d'alarme de dragage ;
- une unité de communication sans fil (400) recevant le signal d'alarme de dragage et émettant à distance le signal d'alarme de dragage, en utilisant un procédé de communication sans fil ; et
- une unité d'entretien de dragage (500) recevant le signal d'alarme de dragage, analysant une quantité de sédiments de dragage correspondant à la charge totale des sédiments de dragage, et déterminant une temporisation de dragage.

3. Système de gestion d'entretien selon la revendication 2, comprenant en outre :
- une unité de mesure de précipitations (200) installée au sol à un emplacement espacé de la barrière à débris (100) d'une distance prédéterminée, l'unité de mesure de précipitations (200) mesurant une quantité de précipitations et générant un signal de données de précipitations ;
dans lequel l'unité de génération d'alarme de dragage (300) reçoit le signal de données de précipitations et le signal de données de charge, et calcule une charge totale des sédiments de dragage sur une zone entière de l'écran (120), et lorsque la charge totale des sédiments de dragage est supérieure à une première limite prédéfinie, ou lorsque la variation de la charge totale des sédiments de dragage en fonction du temps est supérieure à une deuxième limite prédéfinie, l'unité de génération d'alarme de dragage génère un signal d'alarme de dragage ;
l'unité de communication sans fil (400) reçoit le signal d'alarme de dragage et émet à distance le signal d'alarme de dragage, en utilisant un procédé de communication sans fil ; et
l'unité d'entretien de dragage (500) reçoit le signal d'alarme de dragage, analyse une quantité de dragage correspondant à la fois à la quantité de précipitations et à la charge totale des sédiments de dragage, et détermine une temporisation de dragage.

4. Procédé de gestion d'entretien pour une barrière à débris (100) ayant pour fonction de contrôler une quantité de stockage de sédiments de dragage, le procédé de gestion d'entretien comprenant :
une phase d'installation de barrière à débris (S10) consistant à installer la barrière à débris (100) selon la revendication 1, dotée de la pluralité de jauges de contrainte (150) mesurant une charge de sédiments de dragage empilés sur l'écran (120) et générant un signal de données de charge ;
une phase de génération d'alarme de dragage (S20) consistant à recevoir le signal de données de charge, à calculer une charge totale des sédiments de dragage sur une zone entière de l'écran (120), et à générer un signal d'alarme de dragage lorsque la charge totale des sédiments de dragage est supérieure à une première limite prédéfinie, ou lorsque la variation de la charge totale des sédiments de dragage en fonction du temps est supérieure à une deuxième limite prédéfinie ;
une phase de communication sans fil (S30) consistant à recevoir le signal d'alarme de dragage et à émettre à distance le signal d'alarme de dragage, en utilisant un procédé de communication sans fil ; et
une phase d'entretien de dragage (S40) consistant à recevoir le signal d'alarme de dragage, à analyser une quantité de sédiments de dragage correspondant à la charge totale des sédiments de dragage, et à déterminer une temporisation de dragage.

5. Procédé de gestion d'entretien selon la revendication 4, comprenant en outre :
une phase d'installation d'unité de mesure de précipitations (S15) consistant à installer une unité de mesure de précipitations (200) au sol, à un emplacement espacé de la barrière à débris (100) d'une distance prédéterminée, l'unité de mesure de précipitations (200) mesurant une quantité de précipitations et générant un signal de données de précipitations ;
dans lequel la phase de génération d'alarme de dragage (S20) reçoit le signal de données de précipitations et le signal de données de charge, calcule une charge totale des sédiments de dragage sur une zone entière de l'écran (120), et génère un signal d'alarme de dragage lorsque la charge totale des sédiments de dragage est supérieure à une première limite prédéfinie, ou lorsque la variation de la charge totale des sédiments de dragage en fonction du temps est supérieure à une deuxième limite prédéfinie ;
dans lequel la phase de communication sans fil (S30) reçoit le signal d'alarme de dragage et émet à distance le signal d'alarme de dragage, en utilisant un moyen de communication sans fil ; et
dans lequel la phase d'entretien de dragage (S40) reçoit le signal d'alarme de dragage, analyse une quantité de dragage correspondant à la fois à la quantité de précipitations et à la charge totale des sédiments de dragage, et détermine la temporisation de dragage.

6. Procédé de gestion d'entretien selon la revendication 5, dans lequel, au cours de la phase de génération d'alarme de dragage (S20), lorsque la variation de la quantité de précipitations en fonction du temps est supérieure à une troisième limite de sorte que le signal d'alarme de dragage est généré,
la phase d'entretien de dragage (S40) consiste à calculer une charge totale estimée des sédiments de dragage en tenant compte de la quantité de précipitations, à analyser un volume de dragage, et à déterminer une temporisation de dragage.
